# FASCICULE DE BREVET EUROPEEN

(11) **EP 3 164 294 B1**
(45) Date de publication et mention de la délivrance du brevet: **24.10.2018**
(21) Numéro de dépôt: 15753388.6
(22) Date de dépôt: 02.07.2015
(51) Int. Cl.: B60N 2/005, B60N 2/01, B60N 2/06, B60N 2/07, B60N 2/015, B60N 2/42, B60R 22/22, B60R 22/26

(54) **BANQUETTE POUR VÉHICULE AUTOMOBILE ET PROCÉDÉ DE MONTAGE**
SITZ FÜR KRAFTFAHRZEUG UND MONTAGEVERFAHREN
SEAT FOR MOTOR VEHICLE AND MOUNTING METHOD

(30) Priorité: 04.07.2014 FR 1456462
(43) Date de publication de la demande: 10.05.2017
(73) Titulaire: Renault S.A.S., 92100 Boulogne-Billancourt (FR)
(72) Inventeur: DELAGE, Alexandre, F-78790 Septeuil (FR)
(86) Numéro de dépôt international: PCT/FR2015/051824
(87) Numéro de publication internationale: WO 2016/001591

(56) Documents cités:
- EP-A1- 0 614 781
- WO-A1-2014/104211
- DE-A1- 10 311 869
- DE-C1- 4 414 027
- DE-U1- 29 819 764

## Description

### DOMAINE TECHNIQUE AUQUEL SE RAPPORTE L'INVENTION

La présente invention concerne de manière générale le montage des banquettes de sièges dans les véhicules automobiles.

Elle concerne plus particulièrement une banquette pour véhicule automobile, comportant :
- deux rails fixes extérieurs équipés chacun de moyens de fixation à un châssis du véhicule automobile,
- deux rails mobiles extérieurs qui sont respectivement montés coulissant sur les rails fixes extérieurs suivant un axe de coulissement, et qui sont jumelés par une traverse assurant le coulissement conjoint des deux rails mobiles extérieurs, et
- une structure porteuse qui est accouplée aux deux rails mobiles extérieurs et qui délimite au moins deux assises distinctes entre lesquelles il est prévu au moins un moyen d'ancrage pour ceinture de sécurité.

Elle concerne également un véhicule automobile comportant une telle banquette.

Elle concerne enfin un procédé de montage d'une telle banquette sur le châssis d'un véhicule automobile.

### ARRIERE-PLAN TECHNOLOGIQUE

La structure porteuse d'une banquette telle que précitée délimite au moins deux assises pour deux passagers.

Cette structure porteuse comporte alors au moins quatre moyens d'ancrage pour deux ceintures de sécurité, répartis par paire de part et d'autre de chaque assise.

Dans le cas d'une banquette offrant deux assises, il est alors prévu un moyen d'ancrage de chaque côté de la banquette, et deux moyens d'ancrage au centre de cette banquette (voir DE-U-298 19 764).

Pour permettre de régler la position axiale de la banquette dans le véhicule automobile (vers l'avant ou vers l'arrière), la structure porteuse de la banquette est équipée de deux rails mobiles parallèles montés coulissants dans deux rails fixes qui sont vissés sur le plancher, de part et d'autre de la banquette.

Les deux rails mobiles sont alors situés à une distance importante l'un de l'autre.

Les deux moyens d'ancrage qui sont situés au centre de la banquette et qui sont susceptibles de recevoir des efforts très importants en cas d'accident, sont alors généralement fixés sur une poutrelle transversale dont les extrémités sont respectivement vissées sur les deux rails mobiles.

Cette poutrelle transversale doit alors être dimensionnée pour ne pas se déformer plastiquement en cas d'accident. Elle présente donc des dimensions importantes et elle doit être réalisée dans un matériau résistant.

L'inconvénient de cette architecture est que, compte tenu de la masse de la poutrelle transversale, le poids de la banquette s'avère élevé.

### OBJET DE L'INVENTION

Afin de remédier à l'inconvénient précité de l'état de la technique, la présente invention propose une solution technique permettant d'obtenir une banquette moins lourde, qui est en outre facile à monter sur le châssis d'un véhicule automobile.

Plus particulièrement, on propose selon l'invention une banquette telle que définie dans l'introduction, dans laquelle il est prévu :
- un rail fixe intermédiaire qui est situé entre les deux rails fixes extérieurs et qui est équipé de moyens de fixation au châssis du véhicule automobile, et
- un rail mobile intermédiaire qui est monté coulissant sur le rail fixe intermédiaire, et qui comprend :
   - un moyen de retenue adapté à coopérer avec ledit élément d'ancrage en cas d'accident du véhicule automobile, et
   - un moyen de liaison coopérant avec ladite traverse pour assurer le coulissement conjoint du rail mobile intermédiaire et des deux rails mobiles extérieurs, ce moyen de liaison étant ouvert dans une direction parallèle audit axe de coulissement pour permettre son assemblage avec ladite traverse à la faveur du coulissement des rails mobiles extérieurs sur les rails fixes extérieurs.

Ainsi, grâce à l'invention, la fonction de fixation de la structure porteuse, qui est assurée par les rails extérieurs, est découplée de la fonction de retenue du moyen d'ancrage situé entre les deux assises, puisque cette fonction de retenue est assurée par le rail intermédiaire.

Cette solution permet donc de se passer de poutrelle transversale pour retenir le moyen d'ancrage situé entre les deux assises, ce qui permet d'obtenir une banquette de poids moindre.

Cette banquette est en outre plus résistante dans la mesure où, en cas d'accident, les efforts exercés sur les moyens d'ancrage des ceintures de sécurité se répartissent non plus sur deux, mais sur trois rails fixes.

Enfin, le montage d'une telle banquette sur le châssis d'un véhicule par un opérateur est aisé à réaliser.

Lors de ce montage, l'opérateur manoeuvre la structure porteuse munie des rails extérieurs, généralement au moyen d'un dispositif d'assistance au montage, pour l'amener vers le châssis sur lequel est déjà fixé le rail fixe intermédiaire, le rail mobile intermédiaire étant monté coulissant dans ce rail fixe intermédiaire.

Grâce au moyen de liaison, il n'est pas nécessaire d'avoir une grande précision avec le dispositif d'assistance au montage de la banquette, ni de recourir à un moyen de référencement, tel qu'une cale provisoire, pour maintenir le rail mobile intermédiaire dans une position précise permettant l'assemblage du moyen de liaison avec la traverse.

En effet, le moyen de liaison étant ouvert dans une direction parallèle à la direction de coulissement des deux rails extérieurs, l'assemblage de la structure porteuse au rail intermédiaire peut se faire après avoir fixé les rails fixes extérieurs au plancher du véhicule automobile.

Par conséquent, le rail mobile intermédiaire n'a pas besoin d'être indexé dans la mesure où l'assemblage avec la traverse se fait lors du coulissement des rails mobiles extérieurs sur les rails fixes extérieurs, vers l'avant ou vers l'arrière en fonction du sens d'ouverture du moyen de liaison.

Ainsi, le verrouillage du rail intermédiaire s'effectue non pas pendant le montage des rails extérieurs mais lors de la première manipulation d'une mise en tout avant ou en tout arrière des rails mobiles par rapport aux rails fixes extérieurs.

Un tel moyen de liaison permet alors également de gagner en temps opératoire lors du montage de la banquette.

D'autres caractéristiques non limitatives et avantageuses de la banquette conforme à l'invention sont les suivantes :
- ladite traverse comprend une tige et ledit moyen de liaison du rail mobile intermédiaire comprend une encoche et au moins une dent d'encliquetage qui permet de bloquer ladite tige dans ladite encoche ;
- ledit moyen de retenue comporte un premier élément de crochetage adapté à coopérer avec un second élément de crochetage prévu en correspondance sur ledit moyen d'ancrage ;
- ledit second élément de crochetage comprend un crochet ouvert dans une direction opposée à celle du moyen de liaison ;
- ledit second élément de crochetage est monté sur une partie de la structure porteuse de la banquette, qui est déformable en cas d'accident du véhicule automobile ;
- ledit moyen de liaison assure un blocage dudit rail mobile intermédiaire par rapport à ladite traverse selon l'axe de coulissement et une mobilité dudit rail mobile intermédiaire par rapport à ladite traverse selon une direction transversale qui est orthogonale audit axe de coulissement ;
- ledit moyen de liaison assure au moins une mobilité en rotation dudit rail mobile intermédiaire par rapport à ladite traverse.

L'invention propose également un véhicule automobile comportant plancher et une banquette telle que précitée dont les moyens de fixation des rails fixes extérieurs et intermédiaires sont fixés au plancher.

L'invention propose enfin un procédé de montage d'une banquette telle que précitée sur un plancher de véhicule automobile, comportant des étapes consistant à :
a) fixer le rail fixe intermédiaire sur le plancher du véhicule automobile, le rail mobile intermédiaire étant monté préalablement coulissant dans le rail fixe intermédiaire,
b) poser sur le plancher la structure porteuse équipée des rails mobiles extérieurs et des rails fixes extérieurs, de telle sorte que la traverse et le moyen d'ancrage s'étendent respectivement d'un même premier côté du moyen de liaison et du moyen de retenue,
c) fixer les rails fixes extérieurs sur le plancher du véhicule automobile.

De manière avantageuse, on peut prévoir, après l'étape c) du procédé de montage selon l'invention, une étape d) supplémentaire consistant à assembler la traverse avec l'élément de liaison du rail mobile intermédiaire en faisant coulisser conjointement les deux rails mobiles extérieurs sur les rails fixes extérieurs vers un deuxième côté opposé audit premier côté.

### DESCRIPTION DETAILLEE D'UN EXEMPLE DE RÉALISATION

Sur les dessins annexés :
- la figure 1 est une vue schématique en perspective de différents composants d'une banquette selon l'invention ;
- la figure 2 est une vue en coupe longitudinale faisant apparaître les rails fixe et mobile intermédiaires de la banquette de la figure 1 ;
- la figure 3 est une vue de détail rapprochée de la figure 2 montrant l'assemblage du moyen de liaison avec la traverse.

Dans la description, les termes « avant » et « arrière » seront utilisés par rapport à ce véhicule automobile, l'avant d'un composant de la banquette 1 désignant le côté de ce composant qui est tourné vers le capot du véhicule et l'arrière désignant le côté de ce composant qui est tourné vers le coffre.

De la même manière, les termes «inférieur » et «supérieur » seront utilisés par rapport à ce véhicule automobile, la partie inférieure d'un composant de la banquette désignant la partie de ce composant qui est située du côté du plancher du véhicule et la partie supérieure désignant la partie de ce composant qui est située du côté du plafond.

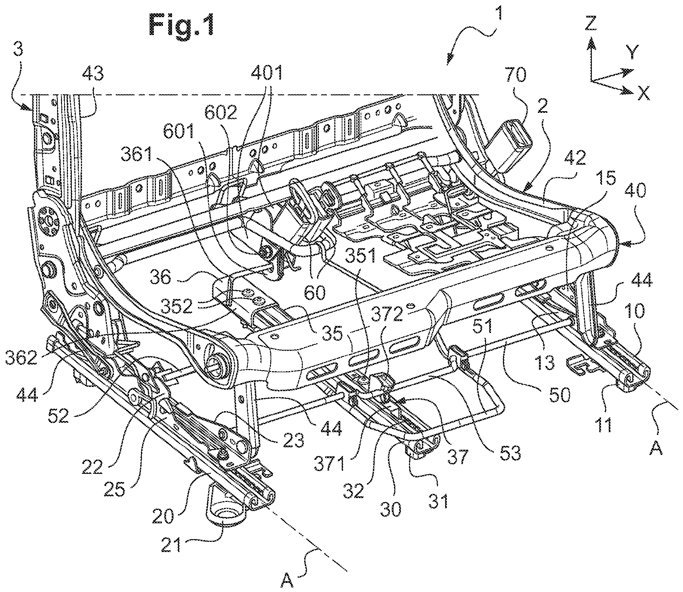

Sur la figure 1, on a représenté la structure interne d'une banquette 1 destinée à être fixée sur le plancher d'un véhicule automobile.

Telle qu'elle est représentée sur la figure 1, la banquette 1 est prévue pour accueillir deux passagers (non représentés). Comme cela sera mentionné à la fin de cet exposé, elle pourra en variante être prévue pour accueillir davantage de passagers.

Cette banquette 1 est montée coulissante sur le plancher du véhicule automobile, selon une direction axiale X définie comme étant sensiblement parallèle à la direction d'avance du véhicule automobile lorsque les roues de ce dernier sont droites.

La banquette 1 comporte classiquement une assise 2 et un dossier 3.

Il pourrait s'agir d'une banquette non rabattable, dont l'assise et le dossier seraient montés fixement l'un par rapport à l'autre.

Il pourrait également s'agir d'une banquette rabattable par simple pivotement du dossier par rapport à l'assise.

Toutefois, il s'agit ici d'une banquette 1 rabattable par un mouvement combiné de pivotement et de translation du dossier 3 par rapport à l'assise 2.

La banquette 1 comporte une structure porteuse 40.

En pratique, l'assise 2 et le dossier 3 comportent chacun une armature métallique 42, 43 autour de chacune desquelles est rapportée une garniture (non représentée) pour le confort des passagers. Ces deux armatures métalliques 42, 43 sont solidarisées ensemble pour former ladite structure porteuse 40.

La banquette 1 comporte par ailleurs deux rails fixes extérieurs 10, 20 parallèles, qui sont équipés chacun de moyens de fixation 11, 21 au plancher du véhicule automobile.

Ces rails fixes extérieurs 10, 20 présentent des formes de poutrelles de sections en U. Ils comportent ainsi chacun un fond et deux ailes latérales dont les bords supérieurs sont repliés l'un vers l'autre.

Les moyens de fixation 11, 21 de chaque rail fixe extérieur 10, 20 au plancher se présentent ici sous la forme de rondelles permettant d'accueillir des vis de fixation. En variante, ces moyens de fixation pourraient bien entendu se présenter autrement.

La banquette 1 comporte également deux rails mobiles extérieurs 15, 25 qui sont respectivement montés coulissant sur les rails fixes extérieurs 10, 20 suivant des axes de coulissement A parallèles à la direction axiale X.

Ces rails mobiles extérieurs 15, 25 présentent des formes de poutrelles de sections en U renversé. Ils comportent ainsi chacun une paroi frontale et deux ailes latérales dont les bords inférieurs sont repliés à l'opposé l'un vers l'autre pour venir coopérer avec les rails fixes extérieurs 10, 20.

Les rails fixes extérieurs 10, 20 étant fixés sur un même plan considéré ici comme étant horizontal, on définit, d'une part, une première direction transversale Y comme la direction horizontale qui est orthogonale à la direction axiale X, et, d'autre part, une seconde direction transversale Z comme la direction verticale.

La coopération des rails mobiles extérieurs 15, 25 avec les rails fixes extérieurs 10, 20 est alors conçue pour laisser un seul degré de liberté aux rails mobiles extérieurs 15, 25, à savoir une mobilité de coulissement suivant l'axe de coulissement A, c'est-à-dire selon la direction axiale X.

Il est alors prévu des moyens de blocage 22 (les moyens de blocage du premier rail fixe extérieur 10 ne sont pas visibles sur la figure 1) de cette mobilité, qui sont déconnectables pour permettre au passager d'avancer ou reculer la banquette 1.

Ici, les rails fixes extérieurs 10, 20 étant crantés, ces moyens de blocage 22 comportent des ergots montés mobiles sur les rails mobiles extérieurs 15, 25 entre :
- une position verrouillée dans laquelle ils coopèrent avec les crans des rails fixes extérieurs 10, 20 pour bloquer le coulissement des rails mobiles extérieurs 15, 25 par rapport aux rails fixes extérieurs 10, 20, et
- une position déverrouillée dans laquelle ils sont situés à distance des crans des rails fixes extérieurs 10, 20 pour libérer le coulissement des rails mobiles extérieurs 15, 25 par rapport aux rails fixes extérieurs 10, 20.

La banquette 1 comporte aussi une traverse 50 permettant d'assurer le coulissement conjoint des deux rails mobiles extérieurs 15, 25 par rapport aux rails fixes extérieurs 10, 20.

Cette traverse 50 se présente ici sous la forme d'une tige dont les extrémités sont accouplées à deux flancs 13, 23 respectivement soudés sur les faces frontales des deux rails mobiles extérieurs 15, 25.

Cette traverse 50 est ici montée sur ces deux flancs 13, 23 avec un unique degré de liberté, à savoir une mobilité de rotation autour d'un axe parallèle à la première direction transversale Y.

La structure porteuse 40 est accouplée aux deux rails mobiles extérieurs 15, 25. Elle pourrait ainsi y être fixée rigidement. Elle y est ici connectée par un système de bielles 44 assurant à la structure porteuse 40 une mobilité de translation rotative par rapport aux rails mobiles extérieurs 15, 25. Cette mobilité de translation rotative est utilisée notamment lorsque le dossier 3 est rabattu contre l'assise 2.

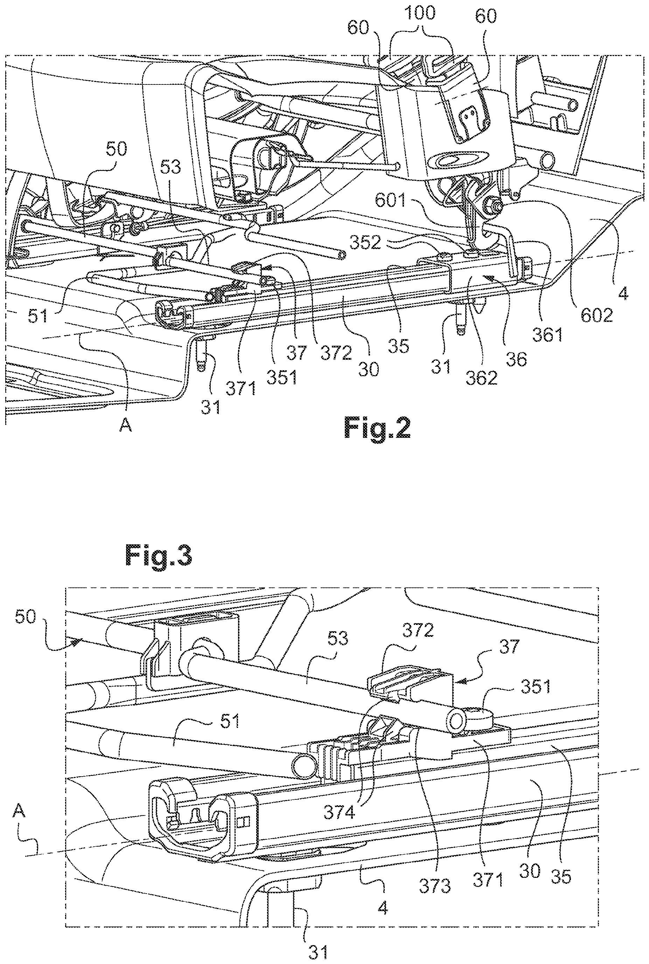

Comme le montrent les figures 1 et 2, il est par ailleurs prévu des moyens d'ancrage 60, 70 de deux ceintures de sécurité 100.

Il est ici prévu un moyen d'ancrage 70 de chaque côté de la structure porteuse 40 (seul l'un d'entre eux est représenté sur la figure 1), ainsi que deux autres moyens d'ancrage 60 contigus (voir figure 2) situés entre les deux assises délimitées par la structure porteuse 40.

Ici, ces moyens d'ancrage 60, 70 se présentent sous la forme de blocs (appelés « pédoncules ») adaptés à loger et retenir des boucles de ceintures de sécurité.

Si les moyens d'ancrage 70 situés de part et d'autre de la structure porteuse 40 peuvent être fixés à la structure porteuse 40, à proximité immédiate des rails fixes extérieurs 10, 20 (ce qui leur assure une bonne résistance aux chocs en cas d'accident), les moyens d'ancrage 60 situés entre les deux assises sont situés à distance de ces rails fixes extérieurs 10, 20. Ces rails fixes extérieurs 10, 20 sont alors trop loin des moyens d'ancrage 60 pour pouvoir reprendre correctement les efforts appliqués sur ces moyens d'ancrage 60 en cas de choc.

Alors, selon une caractéristique particulièrement avantageuse de l'invention, la banquette 1 comporte :
- un rail fixe intermédiaire 30 qui est situé entre les deux rails fixes extérieurs 10, 20, à hauteur des moyens d'ancrage 60, et qui est équipé de moyens de fixation 31 au châssis du véhicule automobile, et
- un rail mobile intermédiaire 35 qui est monté coulissant sur le rail fixe intermédiaire 30 suivant l'axe de coulissement A, qui est découplé de la structure porteuse 40, et qui comporte, d'une part, un moyen de retenue 36 des éléments d'ancrage 60 en cas d'accident, et, d'autre part, un moyen de liaison 37 à ladite traverse 50 permettant d'assurer le coulissement conjoint des deux rails mobiles extérieurs 15, 25 et du rail mobile intermédiaire 35, ce moyen de liaison 37 étant ouvert dans une direction parallèle à l'axe de coulissement A pour permettre son assemblage avec la traverse 50 à la faveur du coulissement des rails mobiles extérieurs 15, 25 sur les rails fixes extérieurs 10, 20.

Par « découplé de la structure porteuse 40 », on entend que le rail mobile intermédiaire 35 ne porte pas la structure porteuse 40. Le système de bielles 44 qui portent la structure porteuse 40 est donc déconnecté du rail mobile intermédiaire 35.

Autrement formulé, la structure porteuse 40 est montée exclusivement sur les deux rails mobiles extérieurs 15, 25. Elle est alors libre en translation et en rotation, dans les trois directions de l'espace, par rapport au rail mobile intermédiaire 35.

En pratique, comme le montre la figure 1, le rail fixe intermédiaire 30 et ses moyens de fixation 31 présentent des formes sensiblement identiques à celles des rails fixes extérieurs 10, 20 et de leurs moyens de fixation 11, 21.

De la même manière, le rail mobile intermédiaire 35 présente une forme sensiblement identique à celle des rails mobiles extérieurs 15, 25.

On pourrait prévoir que le rail mobile intermédiaire 35 soit laissé libre en translation dans le rail fixe intermédiaire 30.

Ici, et de manière préférentielle, le rail fixe intermédiaire 30 est cranté, et il est prévu des moyens de blocage qui comportent des ergots montés mobiles sur le rail mobile intermédiaire 35 entre :
- une position verrouillée dans laquelle ils coopèrent avec les crans 32 du rail fixe intermédiaire 30 pour bloquer le coulissement de ce rail mobile intermédiaire 35 par rapport au rail fixe intermédiaire 30, et
- une position déverrouillée dans laquelle ils sont situés à distance des crans du rail fixe intermédiaire 30 pour libérer le coulissement du rail mobile intermédiaire 35 par rapport au rail fixe intermédiaire 30.

Le moyen de liaison 37, qui équipe le rail mobile intermédiaire 35 pour assurer son coulissement conjoint avec les deux rails mobiles extérieurs 15, 25, est adapté à coopérer avec la traverse 50.

Ce moyen de liaison 37 assure à cet effet le blocage relatif en translation suivant l'axe de coulissement A du rail mobile intermédiaire 35 par rapport à ladite traverse 50.

Ce moyen de liaison 37 est ici avantageusement prévu de telle manière que, si le rail fixe intermédiaire 30 présente un défaut de parallélisme par rapport aux deux rails fixes extérieurs 10, 20, ce défaut ne génère pas un coincement des mobilités de coulissement des rails mobiles 15, 25, 35 dans leurs rails fixes 10, 20, 30.

Le moyen de liaison 37 est ainsi prévu pour laisser au moins une mobilité de translation à la traverse 50 par rapport au rail mobile intermédiaire 35 selon la première direction transversale Y.

Dans le même dessein, le moyen de liaison 37 assure au moins une mobilité en rotation à la traverse 50 par rapport au rail mobile intermédiaire 35.

Grâce au caractère peu contraint de cette liaison, le positionnement du rail fixe intermédiaire 30 sur le plancher n'a donc pas à être particulièrement précis, puisque le moyen de liaison 37 est prévu pour rattraper tout défaut de parallélisme entre les rails fixes 10, 20, 30.

Comme cela a été exposé *supra,* le moyen de liaison 37 est ouvert dans une direction parallèle à l'axe de coulissement A pour permettre son assemblage avec la traverse 50 à la faveur du coulissement des rails mobiles extérieurs 15, 25 sur les rails fixes extérieurs 10, 20.

Cette « ouverture » du moyen de liaison permet un assemblage sans contrainte de la structure porteuse 40 au troisième rail intermédiaire.

Comme le montrent plus en détail les figures 2 et 3, le moyen de liaison 37 comporte ici un socle 371 qui est fixé à la paroi frontale du rail mobile intermédiaire 35 au moyen d'une vis 351 et une tête 372 qui s'étend à partir du socle 371 et dans laquelle il est prévu une encoche 373 (voir figure 3) permettant d'accueillir transversalement la traverse 50.

Cette encoche 373 présente globalement une forme de U ouvert ici vers l'avant.

Le moyen de liaison 37 comprend sur sa tête 372, deux dents 374 d'encliquetage formant mâchoire, qui permettent, après insertion en force d'une tige 53 de la traverse 50 dans l'encoche 373 de bloquer cette tige 53 au fond de l'encoche 373 du moyen de liaison 37.

Le moyen de liaison 37 est ici formé d'une seule pièce en matière plastique.

Ici, la traverse 50 est prévue, non seulement pour assurer le coulissement conjoint des trois rails mobiles 15, 25, 35, mais également pour permettre la commande du déverrouillage des moyens de blocage 22.

Elle forme plus précisément le pivot d'un levier 51 adapté à actionner les moyens de blocage 22 des trois rails mobiles 15, 25, 35.

Ici, ce levier 51 est formé par une tige en U dont les branches sont soudées à la traverse 50, dont la base est située à l'avant de la traverse 50 pour être accessible aux passagers assis sur la banquette 1, et dont les extrémités des branches sont adaptées à actionner une poutrelle transversale 52 de déverrouillage simultané des moyens de blocage 22 des trois rails mobiles 15, 25, 35.

Si le moyen de liaison 37 est situé à l'avant du rail mobile intermédiaire 35, le moyen de retenue 36 est situé à l'arrière de ce rail mobile intermédiaire 35.

Comme le montrent les figures 1 et 2, ce moyen de retenue 36 est prévu pour retenir les moyens d'ancrage 60 en cas d'accident.

Il n'est donc pas nécessairement fixé ou solidarisé aux moyens d'ancrage 60. Il doit seulement être prévu pour que, en cas d'accident frontal à plus de 30 km/h, ce soit majoritairement lui qui reprenne les efforts exercés sur les moyens d'ancrage 60.

Ici, ce moyen de retenue 36 est situé à distance des moyens d'ancrage 60 et il est conçu de telle sorte que ces moyens d'ancrage 60 s'accrochent à lui uniquement en cas d'accident.

De cette manière, ce moyen de retenue 36 n'entrave pas la mobilité de translation rotative de la structure porteuse 40 par rapport aux rails mobiles extérieurs 15, 25.

En variante, on aurait pu prévoir que le moyen de retenue soit monté mobile en rotation sur le rail mobile intermédiaire et qu'il soit rappelé au contact des moyens d'ancrage par des moyens de rappel élastiques, dans le but encore d'éviter que le moyen de retenue n'entrave la mobilité de la structure porteuse.

Ici, comme le montre la figure 1, les moyens d'ancrage 60 sont montés sur une partie 401 de la structure porteuse 40 qui est déformable en cas d'accident du véhicule automobile, ce qui leur permet alors de venir s'accrocher au moyen de retenue 36.

Ils sont plus précisément montés mobiles en rotation sur cette partie 401, autour d'un axe parallèle à la première direction transversale Y.

Les moyens d'ancrage 60 comportent à cet effet un axe 602 qui est enfilé au travers de deux ouvertures coaxiales respectivement prévues dans deux flasques 401 de faibles épaisseurs, soudés à la structure porteuse 40.

Pour venir s'accrocher au moyen de retenue 36 en cas d'accident, les moyens d'ancrage 60 comportent un crochet 601 qui est soudé audit axe 602 et qui est adapté à s'accrocher à une tige 361 prévue en correspondance sur le moyen de retenue 36.

De préférence, le crochet 601 est un crochet qui est ouvert dans une direction opposée à celle du moyen de liaison 37, c'est-à-dire ici vers l'arrière du véhicule automobile.

Le moyen de retenue 36 comporte ici une partie inférieure 362 en forme de manchon, qui est engagée autour du rail fixe intermédiaire 30 et qui est fixée au rail mobile intermédiaire 35 grâce à deux vis 352.

Avantageusement, le crochet présente une épaisseur selon la première direction transversale Y qui est inférieure à la longueur de la tige 361. Il est en outre situé à distance de celle-ci.

De cette manière, le moyen de retenue 36 n'entrave pas la mobilité en translation des rails mobiles 15, 25, 35 dans leurs rails fixes 10, 20, 30 respectifs en cas de défaut de parallélisme du rail fixe intermédiaire 30 par rapport aux rails fixes extérieures 10, 20.

Sur la chaîne de montage du véhicule automobile, la banquette 1 est livrée en deux parties, avec, d'un côté, le rail fixe intermédiaire 30 dans lequel est monté coulissant le rail mobile intermédiaire 35 (équipé du moyen de liaison 37 et du moyen de retenue 36), et, de l'autre, le reste de la banquette 1.

Au cours d'une première étape de montage de la banquette 1, le rail fixe intermédiaire 30 est alors tout d'abord fixé, par exemple au moyen de vis de fixation, sur le plancher du châssis du véhicule automobile.

Au cours d'une seconde étape, le reste de la banquette 1, en particulier sa structure porteuse 40, équipée des rails mobiles extérieurs 15, 25 et des rails fixes extérieurs 10, 20, est posée sur le plancher.

Lors de l'approche du plancher 4 du véhicule, la structure porteuse 40 est manipulée de telle sorte que la traverse 40 et le moyen d'ancrage 60 se placent respectivement d'un même premier côté du moyen de liaison 37 et du moyen de retenue 36.

Autrement formulé, le crochet 601 vient alors se placer naturellement à l'avant de la tige 361 du moyen de retenue 36 et la traverse 50 vient se positionner naturellement à l'avant du moyen de liaison 37, face à l'encoche 373.

Au cours d'une troisième étape, les rails fixes extérieurs 10, 20 sont fixés, par exemple par vissage, sur le plancher du véhicule automobile.

On comprend ici que le découplage de la fonction de support de la structure porteuse 40 (qui est assurée par les rails extérieurs 10, 15, 20, 25) et de la fonction de retenue des moyens d'ancrage 60 (qui est assurée par les rails intermédiaires 30, 35) permet alors d'assurer une bonne reprise des efforts exercés sur les moyens d'ancrage 60 en cas d'accident sans pour autant compliquer le montage de la banquette 1 sur le châssis du véhicule automobile.

De plus, l'assemblage du rail intermédiaire avec la structure porteuse est simplifié grâce à l'ouverture du moyen de liaison 37 en direction de la traverse 50.

Ainsi, lors d'une quatrième étape du procédé de montage, l'opérateur de montage fait coulisser conjointement les deux rails mobiles extérieurs sur les rails fixes extérieurs vers l'arrière si bien que la traverse 50 s'assemble automatiquement avec l'élément de liaison 37 du rail mobile intermédiaire 35 par encliquetage de la tige 53 dans l'encoche 373.

En pratique, l'assemblage du rail mobile intermédiaire 35 sur la traverse 50 s'effectue par une mise en position « tout arrière » de la banquette 1. Il suffit alors à l'opérateur de manoeuvrer la poignée 51 pour déverrouiller les rails mobiles extérieurs 15, 25 par rapport aux rails fixes intermédiaires 10, 20.

En variante, cette opération pourrait être effectuée lors de la mise en plancher plat de la banquette.

Au cours de cette quatrième étape, le crochet 601 vient naturellement se placer au niveau de la tige 361, de manière à pouvoir s'y accrocher en cas d'accident.

Par la suite, grâce aux moyens d'encliquetage 374, la traverse 50 reste maintenue au fond de l'encoche 373, si bien que le crochet 601 reste positionné au niveau de la tige 361, quelle que soit la position des rails mobiles ou des rails fixes.

La présente invention n'est nullement limitée au mode de réalisation décrit et représenté, mais l'homme du métier saura y apporter toute variante conforme à son esprit.

On pourrait ainsi appliquer l'invention à une banquette offrant non pas deux mais trois places. Dans cette variante, il sera alors prévu deux rails fixes extérieurs dans lesquels seront montés coulissants deux rails mobiles extérieurs, ainsi que deux rails fixes intermédiaires dans lesquels seront montés coulissants deux rails mobiles intermédiaires. Les rails mobiles intermédiaires seront situés de part et d'autre de l'assise centrale et comporteront chacun un moyen de liaison à la traverse et un moyen de retenue des moyens d'ancrage.

## Revendications

1. Banquette (1) pour véhicule automobile, comportant :
- deux rails fixes extérieurs (10, 20) équipés chacun de moyens de fixation (11, 21) à un châssis du véhicule automobile,
- deux rails mobiles extérieurs (15, 25) qui sont respectivement montés coulissant sur les rails fixes extérieurs (10, 20) suivant un axe de coulissement (A), et qui sont jumelés par une traverse (50) assurant le coulissement conjoint des deux rails mobiles extérieurs (15, 25), et
- une structure porteuse (40) qui est accouplée aux deux rails mobiles extérieurs (15, 25) et qui délimite au moins deux assises distinctes entre lesquelles il est prévu au moins un moyen d'ancrage (60) pour ceinture de sécurité,
**caractérisée en ce qu'**elle comporte :
- un rail fixe intermédiaire (30) qui est situé entre les deux rails fixes extérieurs (10, 20) et qui est équipé de moyens de fixation (31) au châssis du véhicule automobile, et
- un rail mobile intermédiaire (35) qui est monté coulissant sur le rail fixe intermédiaire (30), et qui comporte :
- un moyen de retenue (36) adapté à coopérer avec ledit élément d'ancrage (60) en cas d'accident du véhicule automobile, et
- un moyen de liaison (37) coopérant avec ladite traverse (50) pour assurer le coulissement conjoint du rail mobile intermédiaire (35) et des deux rails mobiles extérieurs (15, 25), ce moyen de liaison (37) étant ouvert dans une direction parallèle audit axe de coulissement (A) pour permettre son assemblage avec ladite traverse (50) à la faveur du coulissement des rails mobiles extérieurs (15, 25) sur les rails fixes extérieurs (10, 20).

2. Banquette (1) selon la revendication 1, dans laquelle ladite traverse (50) comprend une tige (53) et ledit moyen de liaison (37) du rail mobile intermédiaire (35) comprend une encoche (373) et au moins une dent (374) d'encliquetage qui permet de bloquer ladite tige (53) dans ladite encoche (373).

3. Banquette (1) selon l'une des revendications 1 et 2, dans laquelle ledit moyen de retenue (36) comporte un premier élément de crochetage (361) adapté à coopérer avec un second élément de crochetage (601) prévu en correspondance sur ledit moyen d'ancrage (60).

4. Banquette (1) selon la revendication 3, dans laquelle ledit second élément de crochetage (601) comprend un crochet ouvert dans une direction opposée à celle du moyen de liaison (37).

5. Banquette (1) selon la revendication 4, dans laquelle ledit second élément de crochetage (601) est monté sur une partie de la structure porteuse (40) de la banquette (1), qui est déformable en cas d'accident du véhicule automobile.

6. Banquette (1) selon l'une des revendications 1 à 5, dans laquelle ledit moyen de liaison (37) assure un blocage dudit rail mobile intermédiaire (35) par rapport à ladite traverse (50) selon l'axe de coulissement (A) et une mobilité dudit rail mobile intermédiaire (35) par rapport à ladite traverse (50) selon une direction transversale (Y) qui est orthogonale audit axe de coulissement (A).

7. Banquette (1) selon l'une des revendications 1 à 6, dans laquelle ledit moyen de liaison (37) assure au moins une mobilité en rotation dudit rail mobile intermédiaire (35) par rapport à ladite traverse (50).

8. Véhicule automobile comportant un plancher (4) et une banquette (1) selon l'une des revendications précédentes, dont les moyens de fixation (11, 21, 31) des rails fixes extérieurs (10, 20) et intermédiaire (30) sont fixés au plancher (4).

9. Procédé de montage d'une banquette (1) selon l'une des revendications 1 à 7 sur un plancher (4) de véhicule automobile, comportant des étapes consistants à :
a) fixer le rail fixe intermédiaire (30) sur le plancher (4) du véhicule automobile, le rail mobile intermédiaire (35) étant monté préalablement coulissant dans le rail fixe intermédiaire (30),
b) poser sur le plancher (4) la structure porteuse (40) équipée des rails mobiles extérieurs (15, 25) et des rails fixes extérieurs (10, 20), de telle sorte que la traverse (50) et le moyen d'ancrage (60) s'étendent respectivement d'un même premier côté du moyen de liaison (37) et du moyen de retenue (36),
c) fixer les rails fixes extérieurs (10, 20) sur le plancher (4) du véhicule automobile.

10. Procédé de montage d'une banquette (1) selon la revendication 9, comportant, après l'étape c), une étape d) supplémentaire consistant à assembler la traverse (50) avec le moyen de liaison (37) du rail mobile intermédiaire (35) en faisant coulisser conjointement les deux rails mobiles extérieurs (15, 25) sur les rails fixes extérieurs (10, 20) vers un deuxième côté opposé audit premier côté.

## Patentansprüche

1. Sitzbank (1) für ein Kraftfahrzeug, die aufweist:
- zwei äußere ortsfeste Schienen (10, 20), die je mit Befestigungseinrichtungen (11, 21) an einem Fahrgestell des Kraftfahrzeugs ausgestattet sind,
- zwei äußere bewegliche Schienen (15, 25), die je gemäß einer Gleitachse (A) gleitend auf die äußeren ortsfesten Schienen (10, 20) montiert sind, und die von einem Querträger (50) miteinander verbunden werden, der das gemeinsame Gleiten der zwei äußeren beweglichen Schienen (15, 25) gewährleistet, und
- ein Tragwerk (40), das an die zwei äußeren beweglichen Schienen (15, 25) gekoppelt ist und das mindestens zwei voneinander unterschiedliche Sitzflächen definiert, zwischen denen mindestens eine Verankerungseinrichtung (60) für einen Sicherheitsgurt vorgesehen ist,
**dadurch gekennzeichnet, dass** sie aufweist:
- eine ortsfeste Zwischenschiene (30), die sich zwischen den zwei äußeren ortsfesten Schienen (10, 20) befindet und die mit Befestigungseinrichtungen (31) am Fahrgestell des Kraftfahrzeugs ausgestattet ist, und
- eine bewegliche Zwischenschiene (35), die gleitend auf die ortsfeste Zwischenschiene (30) montiert ist, und die aufweist:
- eine Halteeinrichtung (36), die geeignet ist, im Fall eines Unfalls des Kraftfahrzeugs mit dem Verankerungselement (60) zusammenzuwirken, und
- eine Verbindungseinrichtung (37), die mit dem Querträger (50) zusammenwirkt, um das gemeinsame Gleiten der beweglichen Zwischenschiene (35) und der zwei äußeren beweglichen Schienen (15, 25) zu gewährleisten, wobei diese Verbindungseinrichtung (37) in einer Richtung parallel zur Gleitachse (A) offen ist, um ihren Zusammenbau mit dem Querträger (50) begünstigt durch das Gleiten der äußeren beweglichen Schienen (15, 25) auf den äußeren ortsfesten Schienen (10, 20) zu ermöglichen.

2. Sitzbank (1) nach Anspruch 1, wobei der Querträger (50) eine Stange (53) enthält, und die Verbindungseinrichtung (37) der beweglichen Zwischenschiene (35) eine Kerbe (373) und mindestens einen Einrastzahn (374) enthält, der es ermöglicht, die Stange (53) in der Kerbe (373) zu blockieren.

3. Sitzbank (1) nach einem der Ansprüche 1 und 2, wobei die Halteeinrichtung (36) ein erstes Einhakelement (361) aufweist, das geeignet ist, mit einem zweiten Einhakelement (601) zusammenzuwirken, das entsprechend auf der Verankerungseinrichtung (60) vorgesehen ist.

4. Sitzbank (1) nach Anspruch 3, wobei das zweite Einhakelement (601) einen in einer Richtung entgegengesetzt zu derjenigen der Verbindungseinrichtung (37) offenen Haken enthält.

5. Sitzbank (1) nach Anspruch 4, wobei das zweite Einhakelement (601) auf einen Teil des Tragwerks (40) der Sitzbank (1) montiert ist, der im Fall eines Unfalls des Kraftfahrzeugs verformbar ist.

6. Sitzbank (1) nach einem der Ansprüche 1 bis 5, wobei die Verbindungseinrichtung (37) eine Blockierung der beweglichen Zwischenschiene (35) bezüglich des Querträgers (50) gemäß der Gleitachse (A) und eine Beweglichkeit der beweglichen Zwischenschiene (35) bezüglich des Querträgers (50) gemäß einer Querrichtung (Y) gewährleistet, die zur Gleitachse (A) orthogonal ist.

7. Sitzbank (1) nach einem der Ansprüche 1 bis 6, wobei die Verbindungseinrichtung (37) mindestens eine Drehbeweglichkeit der beweglichen Zwischenschiene (35) bezüglich des Querträgers (50) gewährleistet.

8. Kraftfahrzeug, das einen Fußboden (4) und eine Sitzbank (1) nach einem der vorhergehenden Ansprüche aufweist, deren Befestigungseinrichtungen (11, 21, 31) der äußeren ortsfesten Schienen (10, 20) und Zwischenschiene (30) am Fußboden (4) befestigt sind.

9. Verfahren zum Einbau einer Sitzbank (1) nach einem der Ansprüche 1 bis 7 auf einen Fußboden (4) eines Kraftfahrzeugs, das Schritte aufweist, die darin bestehen:
a) die ortsfeste Zwischenschiene (30) am Fußboden (4) des Kraftfahrzeugs zu befestigen, wobei die bewegliche Zwischenschiene (35) vorher gleitend in die ortsfeste Zwischenschiene (30) montiert wird,
b) das mit den äußeren beweglichen Schienen (15, 25) und den äußeren ortsfesten Schienen (10, 20) ausgestattete Tragwerk (40) derart auf den Fußboden (4) aufzusetzen, dass der Querträger (50) und die Verankerungseinrichtung (60) sich je von einer gleichen ersten Seite der Verbindungseinrichtung (37) bzw. der Halteeinrichtung (36) erstrecken,
c) die äußeren ortsfesten Schienen (10, 20) am Fußboden (4) des Kraftfahrzeugs zu befestigen.

10. Verfahren zum Einbau einer Sitzbank (1) nach Anspruch 9, das nach dem Schritt c) einen zusätzlichen Schritt d) aufweist, der darin besteht, den Querträger (50) mit der Verbindungseinrichtung (37) der beweglichen Zwischenschiene (35) zusammenzubauen, indem die zwei äußeren beweglichen Schienen (15, 25) auf den äußeren ortsfesten Schienen (10, 20) zusammen zu einer zweiten Seite entgegengesetzt zur ersten Seite geschoben werden.

## Claims

1. Bench seat (1) for a motor vehicle, comprising:
- two outer fixed rails (10, 20) each equipped with means (11, 21) for fixing to a chassis of the motor vehicle,
- two outer movable rails (15, 25) which are mounted so as to slide on the outer fixed rails (10, 20) respectively, along a slide axis (A), and which are linked together by a crosspiece (50) ensuring the paired sliding of the two outer movable rails (15, 25), and
- a carrier structure (40) which is coupled to the two outer movable rails (15, 25) and which delimits at least two separate seats, between which at least one anchoring means (60) for a seatbelt is provided,
**characterized in that** it comprises:
- an intermediate fixed rail (30) which is situated between the two outer fixed rails (10, 20) and which is equipped with means (31) for fixing to the chassis of the motor vehicle, and
- an intermediate movable rail (35) which is mounted so as to slide on the intermediate fixed rail (30) and which comprises:
- a retaining means (36) adapted to cooperate with said anchoring element (60) in the case of accident to the motor vehicle, and
- a connecting means (37) cooperating with said crosspiece (50) to ensure the linked sliding of the intermediate movable rail (35) and the two outer movable rails (15, 25), this connecting means (37) being open in a direction parallel to said slide axis (A) in order to allow its assembly with said crosspiece (50) by sliding of the outer movable rails (15, 25) on the outer fixed rails (10, 20).

2. Bench seat (1) according to Claim 1, wherein said crosspiece (50) comprises a rod (53), and said connecting means (37) of the intermediate movable rail (35) comprises a notch (373) and at least one engagement tooth (374) which allows said rod (53) to be locked in said notch (373).

3. Bench seat (1) according to either of Claims 1 and 2, wherein said retaining means (36) comprises a first hook element (361) adapted to cooperate with a second hook element (601) provided correspondingly on said anchoring means (60).

4. Bench seat (1) according to Claim 3, wherein said second hook element (601) comprises a hook open in a direction opposite that of the connecting means (37) .

5. Bench seat (1) according to Claim 4, wherein said second hook element (601) is mounted on a part of the carrier structure (40) of the bench seat (1) which is deformable in the case of accident to the motor vehicle.

6. Bench seat (1) according to any of Claims 1 to 5, wherein said connecting means (37) ensures a locking of said intermediate movable rail (35) relative to said crosspiece (50) along the slide axis (A), and a mobility of said intermediate movable rail (35) relative to said crosspiece (50) in a transverse direction (Y) which is orthogonal to said slide axis (A).

7. Bench seat (1) according to any of Claims 1 to 6, wherein said connecting means (37) ensures at least a rotational mobility of said intermediate movable rail (35) relative to said crosspiece (50) .

8. Motor vehicle comprising a floor (4) and a bench seat (1) according to any of the preceding claims, in which the fixing means (11, 21, 31) for the outer (10, 20) and intermediate fixed rails (30) are fixed to the floor (4).

9. Method for mounting a bench seat (1) according to any of Claims 1 to 7 on a floor (4) of a motor vehicle, comprising steps consisting of:
a) fixing the intermediate fixed rail (30) to the floor (4) of the motor vehicle, the intermediate movable rail (35) being previously mounted so as to slide in the intermediate fixed rail (30),
b) placing on the floor (4) the carrier structure (40) equipped with the outer movable rails (15, 25) and the outer fixed rails (10, 20), such that the crosspiece (50) and the anchoring means (60) extend from a same first side of the connecting means (37) and of the retaining means (36) respectively,
c) fixing the outer fixed rails (10, 20) to the floor (4) of the motor vehicle.

10. Method for mounting a bench seat (1) according to Claim 9, comprising after step c) an additional step d) consisting of assembling the crosspiece (50) with the connecting means (37) of the intermediate movable rail (35) by causing the two outer movable rails (15, 25) to slide as a pair on the outer fixed rails (10, 20) toward a second side opposite said first side.
